# EUROPÄISCHE PATENTSCHRIFT

(11) **EP 0 356 820 B1**
(45) Veröffentlichungstag und Bekanntmachung des Hinweises auf die Patenterteilung: **16.06.1993**
(21) Anmeldenummer: 89115186.2
(22) Anmeldetag: 17.08.1989
(51) Int. Cl.: A01G 9/02, A01G 17/06, A47F 5/08, B25H 3/04

(54) **Wandhalterung für Fassadenbegrünung**
Trellis structure for growing plants against walls
Treillis pour faire pousser des plantes sur des façades

(30) Priorität: 20.08.1988 DE 8810554 U
(43) Veröffentlichungstag der Anmeldung: 07.03.1990
(73) Patentinhaber: ARMO GESELLSCHAFT FÜR BAUELEMENTE BAU- UND WOHNBEDARF GMBH, D-45657 Recklinghausen (DE)
(72) Erfinder: Quante, Heinrich, D-4350 Recklinghausen (DE)
(74) Vertreter: Schulte, Jörg, Dipl.-Ing.

(56) Entgegenhaltungen:
- DE-C- 344 649
- DE-U- 8 610 262
- GB-A- 1 142 952
- GB-A- 2 066 342
- GB-A- 2 119 231
- US-A- 3 198 343

## Beschreibung

Die Erfindung betrifft eine Wandhalterung für die Führung von Pflanzen und für die Lagerung von Pflanzbehältern bei der Fassadenbegrünung und für die Lagerung von Werkzeugen u.ä. Gegenständen, bestehend aus sich kreuzenden und an den Kreuzungsstellen miteinander verbundenen wenigstens ein Gitter bildenden Längs- und Querstäben aus Draht oder Eisen und den zugehörigen, das Gitter im Abstand zur Wand haltenden Verbindungselementen.

Zum Schutz und zum Schmuck von Hausfassaden, Begrenzungswänden und Mauern sowie ähnlichen Gebäudeteilen wurden früher und werden auch in neuerer Zeit immer häufiger rankende Pflanzen eingesetzt. Es hat sich herausgestellt, daß diese Pflanzen dabei nicht nur den optischen Eindruck derartiger Gebäude beeinflussen und verbessern, sondern gleichzeitig auch das Klima innerhalb und außerhalb des Gebäudes optimieren. Auch auf Balkonen, Terassen u.ä. Hausabschnitten werden Pflanzen aufgestellt oder in Pflanzbehältern gehalten, um die geschilderten Vorteile zu erzielen. Dabei mußte man feststellen, daß die häufig aus glatten oder gar beschichteten Einzelelementen bestehenden Fassaden für derartige Pflanzen überhaupt keine Haft- und Führungsmöglichkeiten haben. Außerdem ist eine entsprechende Zurverfügungstellung von Pflanzgut nur im Bereich des Bodens möglich, so daß das Beranken solcher Flächen nur über relativ geringe Höhen möglich ist. Für relativ kleine Flächen sind Wandhalterungen oder besser gesagt Rankgitter bekannt (GB-A-2 119 231), wobei diese aus Stahl oder auch aus farbigem Kunststoff bestehen und in die die eigentlichen Pflanzbehälter mit hineingedrückt werden. Hier ist einmal von Nachteil, daß die Größe des jeweiligen Pflanzgitters schon durch den Werkstoff begrenzt und bei der Herstellung einmal vorgegeben ist, also nicht den jeweiligen Gegebenheiten ohne weiteres angepaßt werden kann. Nachteilig ist andererseits, daß eine Befestigung wenn überhaupt an der Wand je Gitter an mehreren Stellen und nur mit Hilfe üblicher Dübel und sonst üblicher gleichzeitig als Abstandshalter zur Wand dienender Verbindungselemente möglich ist. Dabei müssen diese Verbindungselemente - wie gesagt - an sehr vielen Einzelstellen vorgesehen werden, um überhaupt eine einigermaßen ausreichende Sicherung zu erreichen. Diese zahlreichen Verbindungselemente stellen aber andererseits wegen der Verletzung der Außenkanten eine Gefährdung für die Wand dar, so daß eine solche Lösung allgemein als unbefriedigend angesehen werden muß.

Der Erfindung liegt die Aufgabe zugrunde, eine vielseitig verwendbare, schnell und mit wenig Verbindungselementen zu montierende, auch große Flächen überdeckende Wandhalterung zu schaffen, die gleichzeitig auch völlig geräuschneutral ist.

Die Aufgabe wird erfindungsgemäß dadurch gelöst, daß an jedem der das Gitter bildenden, Längs- oder Querstabenden beidseitig Kupplungsteile in Form einseitig offenen Schlingen so vorgesehen sind, daß die korrespondierenden Kupplungsteile mehrerer Gitter ineinanderschiebbar und einander umfaßbar sind, wobei die Schlingen aus der Gitterebene abgebogen sind.

Eine derartige Wandhalterung kann vorteilhaft sowohl zur Führung der Pflanzen wie auch zur Lagerung der Pflanzbehälter eingesetzt werden. Darüber hinaus ist es möglich, solche Wandhalterungen in Gitterform auch an der Wand von Garagen oder ähnlichen Gebäuden anzubringen, um Werkzeuge oder ähnliche Gegenstände daran aufzuhängen und zu lagern. Da die einzelnen Gitter durch die als Schlingen ausgebildeten Kupplungsteile miteinander zugfest zu verbinden sind, können ohne Schwierigkeiten mit nur wenigen Verbindungselementen mehrere Meter lange und auch in Querrichtung sich erstreckende Gitterflächen geschaffen werden, so daß beispielsweise ein Giebel eines mehrstöckigen Hauses entsprechend ausgerüstet werden kann, um dann als Rankhilfe oder ähnliches für Pflanzen zu dienen. Vorteilhafterweise können an diesem stabilen Gitter an mehreren Stellen Pflanzbehälter angehängt und befestigt werden, so daß gleichzeitig von mehreren Stellen aus eine solche große Fläche begrünt wird. Das Anbringen der einzelnen Wandhalterungen, die als solche die Gitterfläche oder zusammen mit anderen Wandhalterungen entsprechend große Gitterflächen ergeben, ist sehr einfach, weil beispielsweise jeweils nur das oberste Gitter mit der Wand durch zugleich als Abstandshalter ausgebildete Verbindungselemente verbunden werden muß, während die anderen Wandhalterungen in Gitterform dann direkt oder versetzt dazu eingehängt werden, um so gezielt entsprechend lange Bahnen zu erzeugen. Aus Sicherheitsgründen sollte die jeweils unterste Wandhalterung dann auch wieder über Verbindungselemente mit der Wand verbunden werden, wobei die einzelnen Gitter miteinander so verspannt werden, daß sie sich gegeneinander nicht mehr bewegen und Geräusche bei Windbelastung und ähnlichem nicht auftreten können. Das Einhängen der Gitter ineinander wird durch die aus der Gitterebene herausgebogenen Schlingen ermöglicht und erleichtert.

Eine besonders stabile Verbindung der einzelnen Gitter untereinander wird erfindungsgemäß dadurch erreicht, daß die ineinander geschlungenen Kupplungsteile einen kreuzknoten bildend geformt sind. Ein solcher Knoten hat den großen Vorteil, daß die einzelnen Gitter nicht nur zugfest miteinander verbunden sind, sondern auch in Querrichtung stabilisiert werden und so eine sehr gleichförmige und stabile Ranghilfe und Abstützung für Pflanzbehälter bilden.

Nach einer zweckmäßigen Ausbildung der Erfindung ist vorgesehen, daß die Längs- oder Querstabenden die Schlingen ergebend bogenförmig zurückgeführt sind, wobei die abgebogenen Schlingen mit der Gitterebene einen annähernd gleichen, an beiden Gitterkanten allerdings entgegengesetzten Winkel einschließen und wobei der parallel zum jeweiligen Längs- oder Querstab zurückgeführte Endabschnitt hinter der Schlinge einen über der Stabstärke liegenden Abstand zu diesem aufweist. Eine solche Ausführung der Schlingen erleichtert das Einhängen und Verbinden der einzelnen Gitter untereinander. Die an den beiden Gitterkanten in unterschiedliche Richtungen abstehenden Schlingen können so leicht ineinandergeführt werden, wobei durch die in etwa gleichen Winkel nach dem Einführen ein dichtes Anliegen der sich ergebenden Kreuzknotenteile gesichert ist. Das Einführen wird schließlich durch den vorgegebenen Abstand zwischen dem zurückgeführten Endabschnitt und dem eigentlichen Stab erleichtert. Gegebenenfalls kann der Endabschnitt sogar trichterförmig etwas abgebogen werden, was allerdings nicht unbedingt notwendig ist.

Eine weitere zweckmäßige Ausbildung sieht vor, daß die einzelnen Schlingen einer Gitterkante über einen Quer- oder Längsstab miteinander verbunden sind, der jeweils am Schlingenaußenbogen festgelegt ist. Dadurch wird sichergestellt, daß die einzelnen nebeneinander liegenden Schlingen sich beim Transport oder ggf. auch bei der Herstellung oder beim Montieren verbiegen, so daß das Einfädeln und damit Verbinden der einzelnen Gitter erschwert würde. Die einzelnen Schlingen werden durch den am Schlingenaußenbogen angreifenden Stab fixiert, so daß sie beim Einfädeln genau die Position inne haben, die für die leichte Montage erwünscht und zweckmäßig ist.

Ein Versatz der miteinander zu verbindenden Gitter wird erfindungsgemäß dadurch verhindert, daß die Längs- oder Querstabenden an beiden Gitterkanten jeweils zur anderen Seite des Längs- oder Querstabes bogenförmig weg- oder zurückgeführt sind. Beim Ineinanderfädeln der sich dadurch ergebenden Kreuzknoten liegen dann die Längs- bzw. Querstäbe dicht nebeneinander, so daß der Versatz zwischen den einzelnen Gittern in Querrichtung ausgesprochen gering ist.

Das Verbinden der einzelnen Schlingenaußenbögen mit den stabilisierenden Quer- oder Längsstäben wird zweckmäßig dadurch erreicht, daß die Schlingen einen flachgedrückten Schlingenaußenbogen aufweisen. Das Verbinden und Verschweißen von Schlinge und Stab wird dadurch wesentlich verbessert.

Ein sehr stabiles und damit auch große Kräfte aufnehmendes Gitter wird geschaffen, in dem es rechteckförmig ausgebildet ist und über 6 Längs- und 8 Querstäbe verfügt, wobei der Durchmesser der Längsstäbe mit den angeformten Schlingen etwa 50 % über dem der Querstäbe liegt. Vorteilhaft hat sich ein Gitter bzw. eine Wandhalterung herausgestellt, die dabei eine Länge von 1000 mm und eine Breite von 500 mm hat, so daß sich bei den angegebenen Längs- und Querstäben eine Maschenteilung von 100 mm ergibt. Eine solche Maschenteilung ermöglicht das vielseitige Anordnen von Pflanzbehältern und anderen Teilen, so daß die Verwendungsfreundlichkeit als erheblicher Vorteil herausgestellt werden kann.

Die Wandhalterung, bestehend aus den von Längs und Querstäben gebildeten Gittern ist handhabungsfreundlich, weil auf scharfe Kanten und Ecken verzichtet werden kann. Solche Handhabungsfreundlichkeit wird noch weiter dadurch erhöht, daß das gesamte Gitter kunststoffbeschichtet ausgeführt ist. Dadurch ist gleichzeitig ein vorteilhafter Korrosionsschutz erreicht, so daß derartige Wandhalterungen über eine sehr hohe Lebensdauer verfügen.

Die Montagefreundlichkeit der Wandhalterung wird weiter dadurch optimiert, daß der als Verbindungselement dienende Abstandshalter U-förmig ausgebildet ist und durch eine korrespondierende Gegenplatte und eine Halteschraube komplettiert ist. Dabei können die einzelnen Verbindungselemente leicht und schnell dem jeweiligen Gitter zugeordnet werden, um es mit der Wand oder einem bestimmten Gebäudeteil zu verbinden. Für die Halteschrauben werden übliche Dübel eingesetzt, in die die Halterschraube hineingedreht wird, um dann gleichzeitig die gesamte, aus mehreren Gittern bestehende Wandhalterung mit zu fixieren. Eine besonders einfache und wirksame Ausführung des Verbindungselementes für die Wandhalterung sieht vor, daß die Schenkel des U-förmigen Abstandshalters den Längs- oder Querstab und den parallel dazu verlaufenden Endabschnitt des jeweiligen Längs- und Querstabes überspannend ausgebildet und angeordnet sind. Hier bei wird der Vorteil erzielt daß über einen solchen Abstandshalter und durch die Fixierung zweier Stäbe, die im Abstand zueinander angeordnet sind, ein Verdrehen frühzeitig verhindert ist und weiter ein Durchrutschen ausgeschlossen ist, weil sich an diesen Bereich die sich erweiternde Schlinge anschließt. Selbst bei ungenügendem Anschrauben ist eine ausreichende Fixierung durch diese besondere Ausbildung immer noch gesichert, weil die Schlinge wie geschildert dann in den Abstandshalter automatisch hineinrutscht. Durch die U-förmigen Abstandshalter mit entsprechend unterschiedlich langen Schenkeln kann der Abstand zur Wand jeweils wie gewünscht vorgegeben werden, wobei dies noch weiter dadurch verbessert werden kann, daß auch die Gegenplatte aus einem U-Profil besteht, was darüber hinaus den Vorteil hat, daß relativ wenig Berührungspunkte mit der Wand vorhanden sind.

Die Erfindung zeichnet sich insbesondere dadurch aus, daß eine Wandhalterung geschaffen ist, die mit wenigen Verbindungselementen/Abstandshaltern auskommend, auch extrem große Flächen überdecken kann, um dort als Pflanzhilfe, für dekorative Zwecke, als Sichtschutz oder ähnliches zu dienen. Dazu können praktisch beliebig viele gleich ausgebildete Gitter durch einfaches Ineinanderziehen miteinander so verbunden werden, daß dennoch die schwereren Pflanzkübel u.ä. daran festzulegen sind. Genauso ist es möglich, an derart fixierten Wandhalterungen Fahrräder, Werkzeuge oder andere Gegenstände anzuhängen, wobei vorteilhaft auch hier nur relativ wenige Verbindungselemente benötigt werden. Vorteilhaft ist darüber hinaus die Vielseitigkeit einer derartigen Wandhalterung, da sie für die verschiedensten Zwecke eingesetzt werden kann und zwar in mehr oder weniger beliebigen Größen.

Weitere Einzelheiten und Vorteile des Erfindungsgegenstandes ergeben sich aus der nachfolgenden Beschreibung der zugehörigen Zeichnung, in der ein bevorzugtes Ausführungsbeispiel mit den dazu notwendigen Einzelheiten und Einzelteilen dargestellt ist. Es zeigen:
- Fig. 1: mehrere, miteinander verbundene eine Wandhalterung bildende Gitter zur Abdeckung einer Wand und zu deren Begrünung in perspektivischer Darstellung,
- Fig. 2: einen Schnitt durch die aus Fig. 1 ersichtlichen Wandhalterung und die Wand selbst,
- Fig. 3: eine Draufsicht auf ein Verbindungselement,
- Fig. 4: die Seitenansicht des aus Fig. 3 ersichtlichen Verbindungselementes,
- Fig. 5: ein Schnitt durch das aus Fig. 3 und 4 ersichtliche Verbindungselement und
- Fig. 6: ein Verbindungselement mit einer Gegenplatte mit besonders langen Schenkeln.

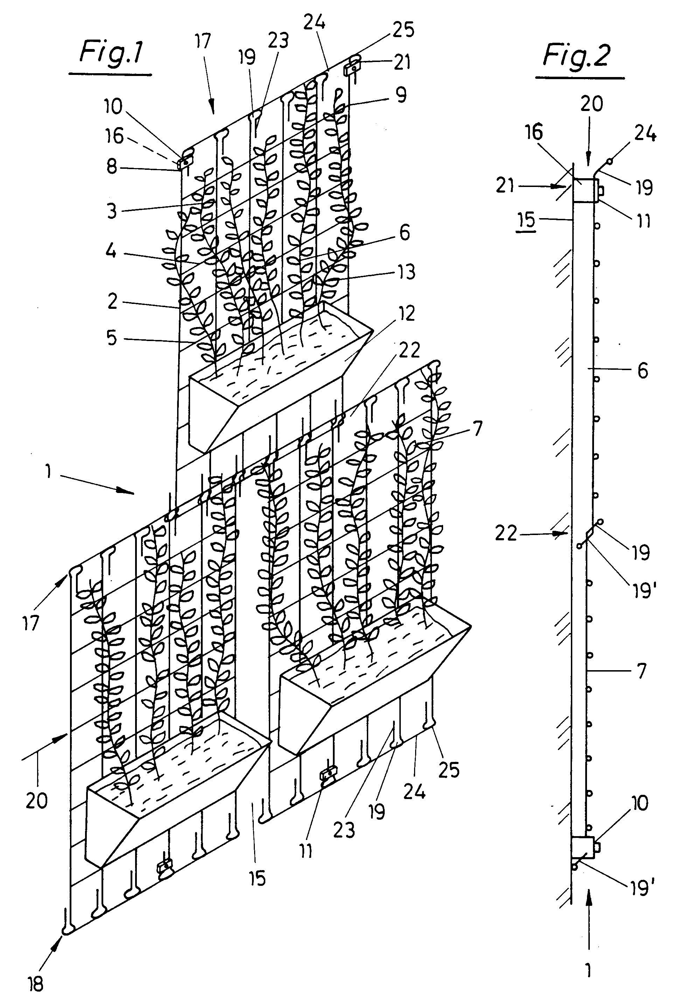

Der Übersichtlichkeit halber ist in Fig. 1 lediglich ein Ausschnitt einer Fassadenbegrünung wiedergegeben, wobei zu dieser Fassadenbegrünung eine Vielzahl jeweils gleich ausgebildeter, eine Wandhalterung (1) ergebender Gitter (6,7) herangezogen worden sind.

Die Wandhalterung (1) bzw. jedes der diese bildenden Gitter (6,7) wird von mehreren parallel zueinander verlaufenden Längsstäben (2, 3) und den rechtwinklig dazu verlaufenden Querstäben (4, 5) gebildet. Die Längsstäbe (2, 3) und die Querstäbe (4, 5) bestehen aus Stahldraht, der mit Kunststoff beschichtet sein kann. Die Stäbe (2, 3, 4, 5) sind durch Schweißpunkte an den Kreuzpunkten miteinander verbunden. Dadurch ergeben sich die aus Fig. 1 ersichtlichen etwa rechteckförmigen Gitter (6, 7).

Bei der aus der Fig. 1 ersichtlichen Ausführungsform sind an den Längsstabenden (8) Kupplungsteile (17, 18) ausgebildet, die miteinander so korrespondieren, daß die einzelnen Gitter (6, 7) in Längsrichtung leicht miteinander zu verbinden sind. Die aus Fig. 1 ersichtlichen Kupplungsteile (17, 18) können genausogut den Querstabenden (9) zugeordnet sein, wobei dann die zugfeste Verbindung in Querrichtung der einzelnen Gitter (6, 7) erfolgen würde.

Über Verbindungselemente (10, 11) sind die einzelnen Gitter (6, 7) mit der Wand (15) verbunden, wobei die Verbindungselement (10, 11) zugleich als Abstandshalter (16), dienen um so den Abstand zwischen Gitter (6, 7) und Wand (15) jeweils variieren zu können.

Aufgrund der stabilen Verbindungselemente (10, 11), die beispielsweise jeweils nur an dem oberen und unteren Ende einer derartigen Gitterkombination/Wandhalterung (1) angeordnet werden, ist ein wirksames Verspannen möglich, so daß ohne weiteres Pflanzbehälter (12) mit Pflanzen (13) daran angeschlagen werden können. Hierzu können zweckmäßigerweise den Pflanzbehältern (12) Haken zugeordnet werden, über die die Pflanzbehälter (12) einfach in die Gitter (6, 7) einzuhängen sind.

Die Verbindung in Längsrichtung erfolgt schnell und ohne großen Aufwand dadurch, daß jeweils an beiden Gitterkanten (21, 22) als Kupplungsteile (17, 18) dienende Schlingen (19) vorgesehen sind. Die Schlingen (19) sind an beiden Gitterkanten (21, 22) in unterschiedlicher Richtung aus der Gitterebene (20) herausgebogen, was Fig. 2 verdeutlicht. Dadurch ist das Einhängen der einzelnen Gitter (6 bzw. 7) ineinander wesentlich erleichtert.

Die Schlinge (19) ist an einer Gitterkante (21) in Richtung Mattenmitte herausgebogen, während sie an der anderen Gitterkante (22) in Richtung aus der Mattenmitte herausgebogen ist. Die bogenförmige Schlinge geht dann in einen Endabschnitt (23) über, der parallel zum eigentlichen Längsstab (2, 3) bzw. Querstab (4, 5) geführt ist. Der Abstand des Endabschnittes (23) zu dem jeweiligen Stab (2, 3, 4, 5) entspricht mindestens der Drahtstärke oder Stabstärke, so daß das Einfädeln erleichtert ist.

Zur Stabilisierung der einzelnen Schlingen (19) sind endseitig zusätzliche Querstäbe (24) vorgesehen, wobei diese Querstäbe (24) an den Schlingenaußenbogen (25) angeschweißt sind, so daß die Schlingen (19) die bei der Herstellung vorgegebene Position nicht verlassen können, bzw. nicht aus dieser herausgebogen werden können, auch nicht bei entsprechenden Transportbelastungen.

Sowohl Fig. 1 wie Fig. 2 verdeutlichen, daß die einzelnen Verbindungselemente (10, 11) jeweils nur an dem oberen und unteren Randbereichen der Wandhalterung (1) vorgesehen sind, um quasi eine gewisse Verspannung der einzelnen, ineinandergehängten Gitter (6, 7) zu erreichen. Auch dann, wenn wesentlich mehr derartiger Gitter (6, 7) aneinander bzw. ineinander gefügt sind, reichen jeweils entsprechende Verbindungselemente am oberen und unteren Ende der Gitterfläche.

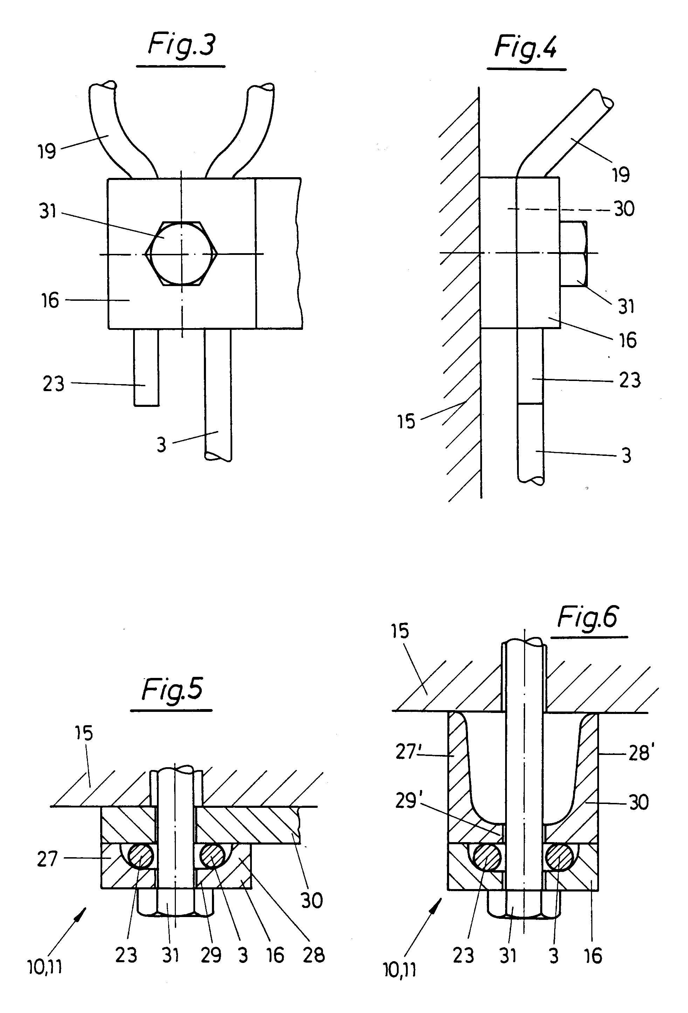

Zur Verbindung der einzelnen Gitter (6, 7) mit der Wand (15) dienen beispielsweise die aus den Figuren 3 bis 6 ersichtlichen Verbindungselemente (10 bzw. 11). Insbesondere Fig. 3 verdeutlicht dabei, daß die aus Abstandshalter (16) mit entsprechend langen Schenkeln (27, 28) und stabilem Verbindungsrücken (29) sowie Gegenplatte (30) und Halteschraube (31) bestehenden Verbindungselemente (10, 11) über die parallel zueinander verlaufenden Stäbe (3) und Endabschnitte (23) geschoben werden, so daß eine stabile Fixierung erreicht ist. Die einzelnen Gitter (6, 7) ziehen sich dabei automatisch in die Verbindungselemente (10, 11) hinein, weil sich an die Endabschnitte (23) und die Stäbe (3) die entsprechende Schlinge (19) anschließt.

Fig. 4 zeigt die aus Fig. 3 ersichtliche Ausführung, die verdeutlicht, daß auch das Abbiegen der Schlinge (19) noch wieder zur schnellen und einfachen Fixierung der Gitter (6,7) und Verbindung mit der Wand (15) beiträgt.

Die Figuren 5 und 6 zeigen Schnitte durch die Verbindungselemente (10, 11), wobei nach Fig. 5 eine flache Gegenplatte (30) verwendet wird und nach Fig. 6 eine mit entsprechend langen Schenkeln (27', 28') zum Einsatz kommt. Durch die entsprechende Formgebung bzw. Länge der Schenkel (27, 27', 28, 28') kann der Abstand des einzelnen Gitter (6 bzw. 7) von der Wand (15) praktisch beliebig vorgegeben werden. Die Gitter weisen günstige Transportmaße auf. Sie sind stapelbar und können so paketweise ohne vorstehende Teile transportiert werden.

## Patentansprüche

1. Wandhalterung (1) für die Führung von Pflanzen (13) und für die Lagerung von Pflanzbehältern (12) bei der Fassadenbegrünung und für die Lagerung von Werkzeugen u.ä. Gegenständen, bestehend aus sich kreuzenden und an den Kreuzungssteilen miteinander verbundenen wenigstens ein Gitter (6,7) bildenden Längs- und Querstäben (2-5) aus Draht oder Eisen und den zugehörigen, das Gitter im Abstand zur Wand (15) haltenden Verbindungselementen (10, 11),
**dadurch gekennzeichnet,**
daß an jedem der das Gitter (6, 7) bildenden, Längs- oder Querstabenden (8, 9) beidseitig Kupplungsteile (17, 18) in Form von einseitig offenen Schlingen (19) so vorgesehen sind, daß korrespondierenden Kupplungsteile (17,18) mehrerer Gitter (6, 7) ineinanderschiebbar und einander umfaßbar sind, wobei die Schlingen (19) aus der Gitterebene (20) abgebogen sind.

2. Wandhalterung nach Anspruch 1,
**dadurch gekennzeichnet,**
daß die ineinander geschlungenen Kupplungsteile (17, 18) einen Kreuzknoten bildend geformt sind.

3. Wandhalterung nach Anspruch 1,
**dadurch gekennzeichnet,**
daß die Längs- oder Querstabenden (8, 9) die Schlingen (19) ergebend bogenförmig zurückgeführt sind, wobei die abgebogenen Schlingen (19) mit der Gitterebene (20) einen annähernd gleichen, an beiden Gitterkanten (21, 22) allerdings entgegengesetzten Winkel einschließen und wobei der parallel zum jeweiligen Längs- oder Querstab (2, 3, 4, 5) zurückgeführte Endabschnitt (23) hinter der Schlinge (19) einen über der Stabstärke liegenden Abstand zu diesem aufweist.

4. Wandhalterung nach Anspruch 1,
**dadurch gekennzeichnet,**
daß die einzelnen Schlingen (19) einer Gitterkante (21; 22) über einen Quer- oder Längsstab (4, 5; 2, 3) miteinander verbunden sind, der jeweils am Schlingenaußenbogen (25) festgelegt ist.

5. Wandhalterung nach Anspruch 1,
**dadurch gekennzeichnet,**
daß die Längs- oder Querstabenden (8, 9) an beiden Gitterkanten (21, 22) jeweils zur anderen Seite des Längs- oder Querstabes (2, 3; 4, 5) bogenförmig weg- oder zurückgeführt sind.

6. Wandhalterung nach Anspruch 1 und Anspruch 3,
**dadurch gekennzeichnet,**
daß die Schlingen (19) einen flachgedrückten Schlingenaußenbogen (25) aufweisen.

7. Wandhalterung nach Anspruch 1,
**dadurch gekennzeichnet,**
daß das Gitter (6, 7) rechteckförmig ausgebildet ist und über 6 Längs- (2, 3) und 8 Querstäbe (4, 5) verfügt, wobei der Durchmesser der Längsstäbe mit den angeformten Schlingen (19) etwa 50 % über dem der Querstäbe liegt.

8. Wandhalterung nach Anspruch 1,
**dadurch gekennzeichnet,**
daß das gesamte Gitter (6, 7) kunststoffbeschichtet ausgeführt ist.

9. Wandhalterung nach Anspruch 1,
**dadurch gekennzeichnet,**
daß der als Verbindungselement (10, 11) dienende Abstandshalter (16) U-förmig ausgebildet ist und durch eine korresponierende Gegenplatte (30) und eine Halteschraube (31) komplettierbar ist.

10. Wandhalterung nach Anspruch 9,
**dadurch gekennzeichnet,**
daß die Schenkel (27, 28) des U-förmigen Abstandshalters (16) den Längs- oder Querstab (2, 3; 4, 5) und den parallel dazu verlaufenden Endabschnitt (23) des Längs- und Querstabes (2-5) überspannend ausgebildet und angeordnet sind.

11. Wandhalterung nach Anspruch 1 und Anspruch 9,
**dadurch gekennzeichnet,**
daß auch die Gegenplatte (30) aus einem U-Profil besteht.

## Claims

1. Wall support (1) for guiding plants (13) and for mounting plant containers (12) when turning the fronts of buildings green and for the mounting of tools amongst other objects, consisting of longitudinal and transverse rods (2-5) of wire or iron, which intersect each other and are connected to each other at the intersection points and forming at least one grid, and of the associated connecting members (10, 11) keeping the grid at a distance from the wall (15), characterised in that provided on both sides on each of the ends of the longitudinal or transverse rods (8, 9), forming the grid (6, 7), are coupling parts (17, 18) in the form of loops (19) open on one side, so that corresponding coupling parts (17, 18) of several grids (6, 7) can be slid one into the other and are able to surround each other, the loops (19) being bent out of the plane of the grid (20).

2. Wall support according to Claim 1, characterised in that the coupling parts (17, 18) looped one in the other are shaped to form crossed knots.

3. Wall support according to Claim 1, characterised in that the longitudinal or transverse rod ends (8, 9) are guided back in a curve producing the loops (19), the bent loops (19) forming with the grid plane (20) an approximately identical, but opposing angle at both grid edges (21, 22) and the end section (23) guided back parallel to the respective longitudinal or transverse rod (2, 3, 4, 5) having, behind the loop (19), a spacing from the latter exceeding the rod thickness.

4. Wall support according to Claim 1, characterised in that the individual loops (19) of one grid edge (21; 22) are connected to each other by way of a transverse or longitudinal rod (4, 5; 2, 3), which is fixed respectively on the outer curve (25) of the loop.

5. Wall support according to Claim 1, characterised in that the longitudinal or transverse rod ends (8, 9) at both grid edges (21, 22) are guided away or back in a curved shape respectively towards the other side of the longitudinal or transverse rod (2, 3; 4, 5).

6. Wall support according to Claim 1 and Claim 3, characterised in that the loops (19) have a loop outer curve (25) which is pressed flat.

7. Wall support according to Claim 1, characterised in that the grid (6, 7) is constructed to be rectangular and has six longitudinal (2, 3) and eight transverse rods (4, 5), the diameter of the longitudinal rods with the integrally formed loops (19) exceeding that of the transverse rods by approximately 50%.

8. Wall support according to Claim 1, characterised in that the entire grid (6, 7) is coated with synthetic material.

9. Wall support according to Claim 1, characterised in that the spacer member (16) serving as a connecting member (10, 11) is constructed to be U-shaped and can be completed by a corresponding counter-plate (30) and a retaining screw (31).

10. Wall support according to Claim 9, characterised in that the sides (27, 28) of the U-shaped spacer member (16) are constructed and arranged to span the longitudinal or transverse rod (2, 3; 4, 5) and the end section (23) of the longitudinal and transverse rod (2-5) extending parallel thereto.

11. Wall support according to Claim 1 and Claim 9, characterised in that the counter-plate (30) also consists of a U-section.

## Revendications

1. Support mural (1) pour le guidage de plantes (13) et pour le logement de bacs à plantes (12) pour le fleurissement de façades et pour le logement d'outils et autres objets similaires, constitué de baguettes longitudinales et transversales (2-5) en fil ou fer formant au moins un treillis (6, 7), se croisant et reliées les unes aux autres aux points de croisement et des éléments de liaison (10, 11) adjoints maintenant le treillis à distance du mur (15),
caractérisé en ce que
des pièces de liaison (17, 18) en forme de boucles (19) ouvertes d'un côté sont prévues des deux côtés sur chacune des baguettes longitudinales ou transversales (8, 9) formant le treillis (6, 7) de telle manière que des pièces de liaison (17, 18) correspondantes de plusieurs treillis (6, 7) peuvent coulisser les unes dans les autres et s'entourer les unes les autres, les boucles (19) étant repliées à l'extérieur du plan (20) du treillis.

2. Support mural selon la revendication 1,
caractérisé en ce que
les pièces de liaison (17, 18) enlacées les unes dans les autres sont conformées pour former des noeuds de croisement.

3. Support mural selon la revendication 1,
caractérisé en ce que
les baguettes longitudinales ou transversales (8, 9) sont ramenées en forme d'arc pour former les boucles (19), les boucles (19) repliées formant avec le plan (20) du treillis un angle sensiblement égal, inversé en réalité aux deux arêtes (21, 22) du treillis et la section terminale (23) ramenée parallèlement à la baguette longitudinale ou transversale (2, 3, 4, 5) respective présentant derrière la boucle (19) un écartement par rapport à celle-ci supérieur à l'épaisseur de baguette.

4. Support mural selon la revendication 1,
caractérisé en ce que
les boucles (19) individuelles d'une arête (21 ; 22) de grille sont reliées l'une à l'autre par une baguette transversale ou longitudinale (4, 5 ; 2, 3) qui est fixée respectivement à l'arc extérieur (25) de la boucle.

5. Support mural selon la revendication 1,
caractérisé en ce que
les baguettes longitudinales ou transversales (8, 9) sont écartées ou ramenées en forme d'arc aux deux arêtes (21, 22) du treillis respectivement de l'autre côté de la baguette longitudinale ou transversale (2, 3 ; 4, 5).

6. Support mural selon la revendication 1 et la revendication 3,
caractérisé en ce que
les boucles (19) présentent un arc extérieur (25) de boucle comprimé à plat.

7. Support mural selon la revendication 1,
caractérisé en ce que
le treillis (6, 7) est de conformation rectangulaire et dispose de 6 baguettes longitudinales (2, 3) et 8 baguettes transversales (4, 5), le diamètre des baguettes longitudinales avec les boucles (19) conformées dépassant d'environ 50 % celui des baguettes transversales.

8. Support mural selon la revendication 1,
caractérisé en ce que
l'ensemble du treillis (6, 7) est réalisé revêtu de matière synthétique.

9. Support mural selon la revendication 1,
caractérisé en ce que
l'écarteur (16) servant d'élément de liaison (10, 11) est réalisé en forme de U et peut être complété par une contre-plaque (30) correspondante et une vis de maintien (31).

10. Support mural selon la revendication 9,
caractérisé en ce que
les branches (27, 28) de l'écarteur (16) en forme de U sont réalisées et disposées superposées à la barrette longitudinale ou transversale (2, 3 ; 4, 5) et à la section terminale (23) de la barrette longitudinale et transversale (2-5) qui s'étend parallèlement à celle-ci.

11. Support mural selon la revendication 1 et la revendication 9,
caractérisé en ce
que la contre-plaque (30) est également constituée par un profilé en U.
